**Europäisches Patentamt**

(19) **European Patent Office**

**Office européen des brevets**

(11) Numéro de publication: **0 108 028**
**B1**

(12) **FASCICULE DE BREVET EUROPEEN**

(45) Date de publication du fascicule du brevet:
24.06.87

(51) Int. Cl.⁴: **H 04 L 7/10, H 03 M 13/00**

(21) Numéro de dépôt: **83460001.7**

(22) Date de dépôt: **03.10.83**

(54) **Système de synchronisation de multiplex numériques de paquets.**

(30) Priorité: **21.10.82 FR 8218123**

(43) Date de publication de la demande:
**09.05.84 Bulletin 84/19**

(45) Mention de la délivrance du brevet:
**24.06.87 Bulletin 87/26**

(84) Etats contractants désignés:
**BE CH DE GB IT LI NL SE**

(73) Titulaire: **Servel, Michel, Le Rhu en Servei,
F-22300 Lannion (FR)**
Titulaire: **Thomas, Alain, Ar Santé L 322, F-22300 Lannion
(FR)**

(72) Inventeur: **Servei, Michel, Le Rhu en Servei,
F-22300 Lannion (FR)**
Inventeur: **Thomas, Alain, Ar Santé L 322,
F-22300 Lannion (FR)**

(74) Mandataire: **Le Guen, Louis François, Cabinet Louis Le
Guen 1, avenue Edouard VII B.P. 91, F-35802 Dinard
Cédex (FR)**

(56) Documents cités:
**GB - A - 1 107 047**

**IBM TECHNICAL DISCLOSURE BULLETIN, vol. 18, no. 1,
juin 1975, pages 209-210, New York, US R.A. DONNAN:
"Idle fill for a code independent line control"
ELECTRONIC DESIGN, vol. 30, no. 14, juillet 1982, pages
5539-5542, Waseca, MN, Denville, NJ, US J. GALLIO et
al.: "Bit protocols poised to fill future
data-commneeds"
COMPUTER DESIGN, vol. 20, no. 5, mai 1981, pages
103-112, Winchester, US A. GOLDBERGER: A
designer's review of data communications"**

ACTORUM AG

## Description

La présente invention concerne un procédé de synchronisation d'un train numérique destiné à fournir en réception un cadrage correct de l'information. Pour cela, le train numérique transmis est structuré dans le temps en intervalles de temps récurrents de longueur fixe et l'information à transmettre est découpée selon des blocs, de la longueur d'un intervalle de temps, appelés «paquets» et comportant une partie information proprement dite et une partie étiquette servant à identifier le paquet.

Dans des systèmes connus de synchronisation de transmission numérique synchrone, l'information est structurée en trames qui sont reprérées par l'utilisation d'un motif particulier: le verrouillage de trame. La détection de ce motif de verrouillage sert à cadrer un automate dans l'équipement de réception qui s'attend alors à le retrouver cycliquement au même emplacement. En pratique, le motif du verrouillage peut aussi apparaître dans l'information transportée, formant alors ce qu'il est convenu d'appeler une imitation de verrouillage. Ces possibilités d'imitation compliquent les algorithmes de verrouillage qui seront d'autant plus performants et d'autant plus fiables que la longueur du mot de verrouillage sera plus grande en regard de la longueur de la trame.

Dans le système connu de synchronisation de la transmission numérique suivant la procédure HDLC, on utilise des fanions. Cette technique assure la synchronisation et la reconnaissance de l'information. La méthode consiste à définir une entité binaire, le fanion, qui n'apparaîtra à aucun moment dans le flux d'information. La répétition de ce motif signifie l'absence d'information ou une séparation entre deux flux d'information différents. Dans la procédure HDLC, ce fanion est constitué d'un octet avec six «1» encadrés par deux «0» pour former le motif 01111110. La configuration de six «1» consécutifs est interdite dans le flux d'information, ce qui est obtenu lors du codage en forçant un zéro non significatif chaque fois que l'on rencontre cinq «1» consécutifs.

Un autre système de synchronisation connu consiste à procéder à une violation de code. Cette procédure s'apparente à celle présentée au paragraphe précédent. Ici, au lieu de distinguer l'information de la non-information en représentant cette dernière à l'aide de fanions, on la matérialise en ayant recours à des éléments de code de transmission interdits. En effet, un code de transmission comporte nécessairement des redondances destinées à détecter des fonctionnements défectueux. Certaines de ces redondances peuvent être utilisées en guise de fanion.

Dans le cadre d'une transmission numérique synchrone de l'information découpée en paquets de longueur fixe, le système proposé suivant l'invention présente un certain nombre d'avantages par rapport aux solutions connues.

L'information est transportée sous la forme où elle est fournie par le générateur de paquets sans nécessiter aucune manipulation au niveau binaire, telle qu'une insertion de zéros dans la procédure HDLC. Ceci évite, en particulier, le besoin d'un stockage supplémentaire de l'information pour permettre l'insertion de zéros.

La technique par violation de code de transmission présente le même avantage. Cependant, si elle est acceptable pour un réseau local bâti de toute pièce, elle devient tout à fait inutilisable dès que l'on envisage d'utiliser des artères de transmission existantes avec leur code bien défini et optimisé pour sa fonction de transport, ce qui est pour ainsi dire toujours le cas en télécommunications.

En ce qui le concerne, le système proposé, remarquable par sa simplicité et son immunité aux verrouillages incorrects, ne réduit pas la capacité du support de transmission par l'addition à l'information de signaux synchronisants dans la mesure où ces signaux sont justement l'absence d'information.

Suivant une caractéristique de l'invention, il est prévu un système de synchronisation d'un système de transmission numérique à multiplex découpés en intervalles de temps égaux et récurrents, dans lesquels l'information est repérée par une adresse explicite associée, l'absence d'information dans un intervalle de temps etant repérée par une adresse specifique, non utilisée par ailleurs comme adresse, la reconnaissance de ladite adresse spécifique servant simultanément à synchroniser le cadrage des intervalles de temps.

La caractéristique de l'invention mentionnées ci-dessus, ainsi que d'autres, apparaîtra plus clairement à la lecture de la description suivante d'un exemple de réalisation, ladite description étant faite en relation avec les dessins joints, parmi lesquels:

la Fig. 1 est un diagramme temporel illustrant la suite des paquets transmis, suivant le procédé de l'invention,

la Fig. 2 est le schéma d'un circuit de synchronisation mettant en œuvre le procédé de synchronisation suivant l'invention, et

les Figs. 3a à 3j sont des formes illustrant les formes des signaux en divers points du schéma de la Fig. 2.

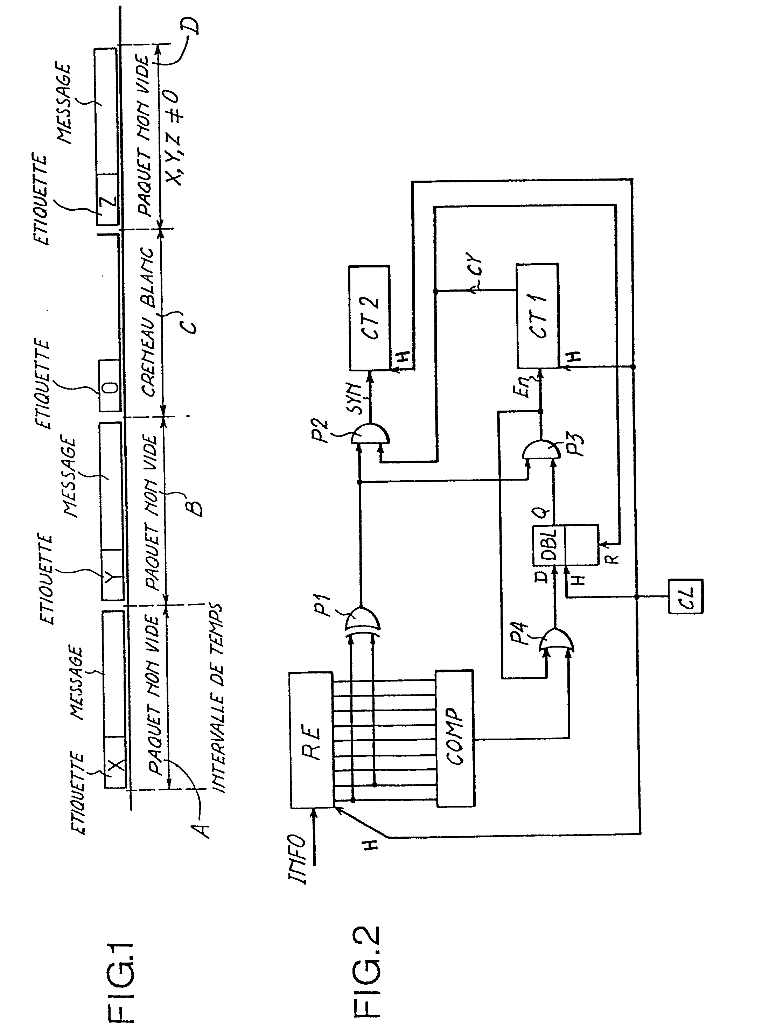

Dans un exemple de réalisation du système de synchronisation, suivant l'invention, les intervalles de temps ont chacun une longueur constante de 16 octets. Comme le montre la Fig. 1, chaque paquet non vide A, B ou D occupe entièrement un intervalle de temps et comporte une partie étiquette de 1 octet et une partie message utilisant les 15 octets restants. L'étiquette X, Y ou Z d'un paquet A, B ou D permet d'identifier ce dernier et est obligatoirement non nulle. On dispose donc de 255 valeurs possibles pour les étiquettes de paquets. L'étiquette nulle est réservée aux intervalles de temps vides d'information, c'est à dire ne trasmettant pas de paquet.

Comme les paquets sont de longueur fixe et qu'ils sont transportés dans des créneaux cycliques récurrents, la détection des délimitations des paquets ne nécessite pas le recours à des délimiteurs de paquets, mais se satisfait, une fois que le cadrage est obtenu, d'un organe très simple de traitement cyclique.

Le cadrage mentionné ci-dessus est obtenu en se synchronisant sur les «créneaux blancs», c'est à dire sur les intervalles de temps vides d'information, lesquels ont une étiquette nulle comme on l'a mentionné plus haut. Ceci suppose que le multiplex de paquets n'est pas utilisé avec un taux de charge de 1, mais qu'une faible partie de la capacité, par exemple de l'ordre de 1%, est réservée aux fonctions de synchronisation. Un créneau blanc est constitué d'un octet nul suivi de 120 bits représentés alternativement par des «1» et «0», comme représenté en C entre les paquets B et D, Fig. 1. Toute autre étiquette et toute autre configuration de 120 bits pourraient aussi convenir, mais il est évident que celle-ci permet la mise en œuvre de moyens simples.

Dans une variante, pour équilibrer le nombre des bits «0» et «1» afin de satisfaire avantageusement aux conditions techniques de transmission, on peut préférer former un créneau blanc avec un premier octet comportant autant de «1» que de «0». Par exemple, ce premier octet sera «00001111», suivi de 120 bits de «0» et de «1» alternés, c'est-à-dire que l'on aura un créneau blanc «000011110101010 ... 0101».

Dans l'équipement de réception, un circuit de synchronisation dont l'entrée est reliée à la ligne de transmission assure une observation continue de l'information circulant sur la ligne. Ce circuit délivre un signal de recadrage systématique de l'information chaque fois que la configuration correspondant aux 128 éléments binaires du créneau blanc est détectée dans le circuit. En dehors de ces créneaux blancs, la synchronisation est uniquement assurée par un compteur cyclique ayant pour récurrence la longueur des intervalles de temps. Le recadrage systématique sur la reconfiguration créneau blanc est autorisé dans la mesure où ce créneau, par sa taille de 16 octets, constitue un verrouillage de trame, statistiquement quasi totalement inimitable.

Il faut noter que, s'il en était encore besoin, tout risque d'imitation pourrait être écarté en interdisant, pour les paquets, les huit valeurs d'étiquettes 10101010, 01010101, 00101010, 00010101, 00001010, 00000101, 00000010 et 00000001. Dans ce cas, toute possibilité de rencontrer la configuration synchronisante à cheval sur deux paquets d'information est écartée. Les considérations mentionnées ci-dessus font bien sûr abstraction des erreurs en transmission en ligne. Quand on utilise la variante de créneau blanc mentionnée ci-dessus, les valeurs d'étiquettes suivantes sont interdites: 10101010, 01010101, 11010101, 11101010, 11110101, 01111010, 00111101 et 00011110.

Un exemple de circuit de synchronisation, suivant l'invention, est montré à la Fig. 2. Un registre à décalage RE a son entrée série reliée à la ligne de transmission INFO et une entrée d'horloge H

reliée à un circuit d'horloge CL restituant le rythme bit. Le registre RE a huit étages. Ses huit sorties binaires sont reliées aux huit premières entrées parallèles d'un comparateur COMP aux huit secondes entrées duquel sont appliqués des potentiels correspondant au «0» binaire.

De plus, les sorties parallèles de rang «1» et «2» du registre RE sont reliées aux entrées d'une porte OU-exclusif P1. La sortie de la porte OU-exclusif P1 est reliée aux premières entrées de deux portes ET P2 et P3.

La sorte du comparateur COMP est reliée à une entrée d'une porte OU P4 dont la seconde entrée est reliée à la sortie de la porte ET P3 et dont la sortie est reliée à l'entrée D d'une bascule DBL. La bascule DBL est du type D et a son entrée d'horloge H reliée à l'horloge CL, sa sortie Q reliée à la seconde entrée de la porte P3 et son entrée R de remise à zéro reliée à la sortie CY d'un compteur CT1.

Le compteur CT1 est un compteur à sept bits dont l'entrée d'horloge H est reliée à l'horloge CL et l'entrée de signal En reliée à la sortie de la porte P3. Quand l'entrée En est au niveau bas, le compteur CT1 est bloqué sur le compte «8». La sortie CY, correspondant à la sortie de compte 127, du compteur CT1 est encore reliée à la seconde entrée de la porte P2 dont la sortie est reliée à l'entrée de signal SYN d'un compteur CT2.

Le compteur CT2 est un compteur à huit bits dont l'entrée d'horloge H est reliée à l'horloge CL. Quand l'entrée SYN de CT2 passe au niveau haut, le compteur CT2 est réinitialisé à zéro.

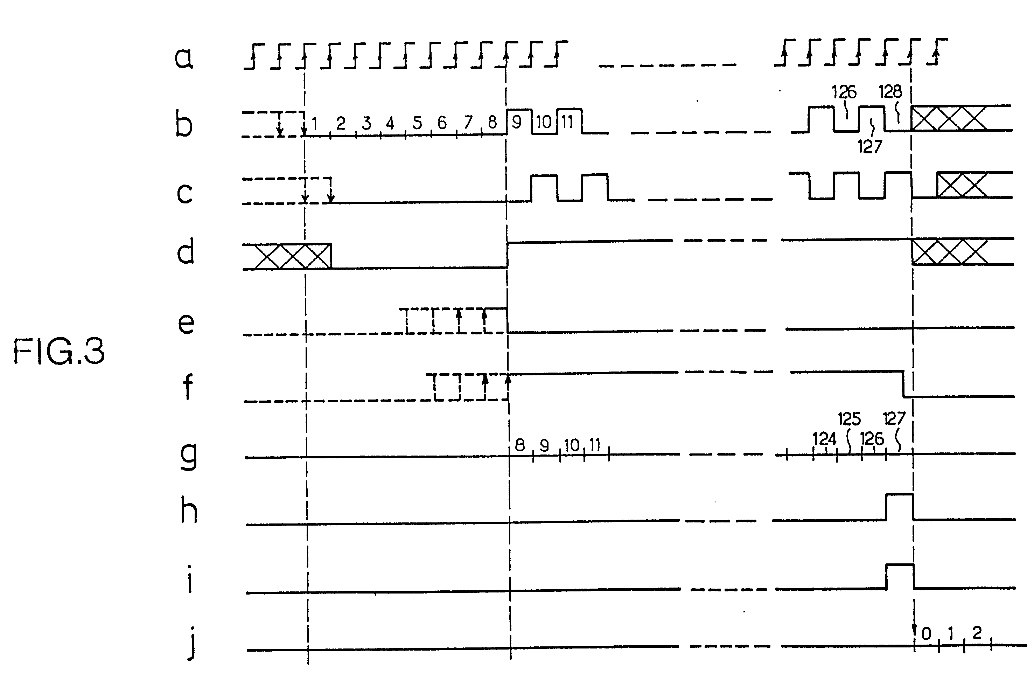

La Fig. 3a montre la suite des fronts avant du signal délivré par l'horloge CL.

La Fig. 3b montre l'allure de l'état du signal de sortie de rang «1» du registre RE, lors de la réception des 128 bits d'un créneau blanc. On notera que les huit premiers bits du créneau étant des «0», le signal reste d'abord au niveau bas et, ensuite, il alterne cycliquement au rythme bit entre les temps 9 et 128, comme les bits du créneau.

La Fig. 3c montre l'allure du signal de sortie de rang «2» du registre RE, qui, dans le cas particulier de la réception d'un créneau blanc, se trouve être celle de la Fig. 3b, retardée d'un temps d'horloge.

La Fig. 3d montre l'allure du signal de sortie de la porte OU-exclusif P1. On notera que, pendant les temps bits 2 à 8, ce signal est au niveau bas tandis qu'après le temps bits 8, il reste uniformément au niveau haut, puisque l'étiquette est nulle et a donc été reconnue à la fin du temps 8.

La Fig. 3e montre l'allure du signal de sortie du comparateur COMP. On notera que, pendant les temps bits 9 à 128, il reste uniformément au niveau bas.

La Fig. 3f montre l'état du signal de la sortie Q de la bascule DBL. Il apparaît que la sortie Q est au niveau haut du bit 9 au bit 127, puis passe au niveau bas au début du bit 128.

La Fig. 3g montre l'état de comptage du compteur CT1 qui passe du compte 8 au compte 9 à la transition entre les bits 9 et 10, puis croît jusqu'à 127.

La Fig. 3h montre l'état de la sortie CY du compteur qui, normalement au niveau bas, passe au niveau haut pendant le bit 128.

La Fig. 3i montre l'état de la sortie de la porte ET P2. Il apparaît que cet état correspond, dans le cas particulier de réception du créneau blanc, à l'état de la sortie SY du compteur CT1.

La Fig. 3j montre l'état de compte du compteur par 128 CT2 qui est remis à zéro par le front arrière du signal de sortie de la porte ET P2.

Le registre RE assure la présentation du train de bits série sous la forme de 8 bits présents en parallèle à ses sorties, ces 8 bits circulant au rythme bit. Le comparateur COMP compare l'octet délivré en parallèle par le registre RE à la configuration 8 bits nuls et, quand une comparaison positive est obtenue, il délivre une impulsion de niveau haut, Fig. 3e, ce qui correspond à une présomption de la présence d'une étiquette de créneau blanc. L'impulsion délivrée par le comparateur COMP active, par la porte OU P4, le passage à l'état «1» de la bascule de détection de blanc DBL. L'entrée de la porte ET P3, qui est reliée à la sortie Q de la bascule DBL, passe donc au niveau haut pendant le 9ᵉ temps bit.

Par ailleurs, jusqu'au 8ᵉ temps bit, la sortie de la porte OU-exclusif P1 est au niveau bas puisque ses entrées sont à «0». A la première transition du signal reçu, au début du 9ᵉ temps bit, la sortie de P1 passe au niveau haut. Donc, à cet instant, la porte ET P3, avec ses deux entrées à l'état haut, délivre un signal de déclenchement de comptage au compteur CT1 qu'elle maintenait avant dans un état bloqué à «8», comme le montre la forme d'onde 3g.

Par ailleurs, le signal de sortie de la porte ET P3 est appliqué à la seconde entrée de la porte OU P4. Ainsi, quand au temps bit 9, la sortie du comparateur COMP repasse au niveau bas, Fig. 3e, l'entrée D de la bascule DBL est maintenue au niveau haut, tant que la sortie de la porte P1 reste au niveau haut, Fig. 3d.

Si la sortie de la porte P1 reste à «1» pendant 119 périodes d'horloge, comme le montre la Fig. 3d, aucune réinitialisation n'intervient sur le compteur CT1 qui compte jusqu'à la valeur 127 pour laquelle sa sortie CY est activée, Fig. 3i.

Si, au 128ᵉ temps bit, la sortie de la porte P1 est toujours à «1», le signal de la sortie CY est appliqué à la porte ET P2 et le signal de sortie de la porte P2 initialise le compteur CT2, qui recommence à compter à partir de 0, comme le montre la Fig. 3j. Par ailleurs, le signal de la sortie CY remet à zéro la bascule DBL, si bien que la sortie de la porte ET P3 passe au niveau bas, ce qui réinitialise le compteur CT1 à «8» et fait appliquer un «0» à l'entrée D de la bascule DBL.

En pratique, le signal de sortie de la porte ET P2 sert de signal de synchronisation SYN qui agit sur le chargement parallèle de CT2 et cadre sa phase de comptage sur les intervalles de temps de la ligne réception. Ce cadrage se poursuivra systématiquement et périodiquement jusqu'à réception d'un nouveau créneau blanc.

Si, avant le 128ᵉ temps bit, deux bits consécutifs du message reçu ont la même valeur, la porte P1 a sa sortie qui passe au niveau bas, de même que la sortie de la porte P3, et le compteur CT1 est immédiatement réinitialisé à «8» et son comptage bloqué.

**Revendications**

1. Système de synchronisation d'un système de transmission numérique à multiplex découpés en intervalles de temps égaux et récurrents, l'information à transmettre étant découpée en paquets, chaque paquet (A, B ou D) occupant un intervalle de temps et comprenant une étiquette (X, Y ou Z) de longueur fixe devant le champ de données, caractérisé en ce que, dans chaque intervalle de temps (C) non occupé par un paquet, on transmet un signal de synchronisation d'intervalle ayant la longueur d'une étiquette de paquet, mais non utilisable comme étiquette de paquet, le reste de l'intervalle non occupé étant rempli d'une suite quelconque de signaux.

2. Système de synchronisation suivant la revendication 1, caractérisé en ce que, dans chaque intervalle de temps non occupé, la partie qui suit le signal de synchronisation d'intervalle est une suite de bits prédéterminée.

3. Système de synchronisation suivant la revendication 2, caractérisé en ce que le motif de synchronisation du multiplex numérique est constitué par la configuration propre aux intervalles de temps non occupés.

4. Système de synchronisation suivant la revendication 2 ou 3, caractérisé en ce que le signal de synchronisation d'intervalle est une suite de «0» et la suite prédéterminée est une suite alternée de «1» et de «0».

5. Système de synchronisation suivant la revendication 2 ou 3, caractérisé en ce que le signal de synchronisation d'intervalle est la suite «00001111», et la suite prédéterminée est une suite alternée de «0» et de «1».

6. Système de synchronisation suivant l'une des revendications 1 à 5, caractérisé en ce que la longueur d'un intervalle de temps est de seize octets et la longueur d'une étiquette d'un octet.

7. Système de synchronisation suivant la revendication 4 ou 6, caractérisé en ce que les huit codes d'étiquette 10101010, 01010101, 00101010, 00010101, 00001010, 00000101, 00000010 et 00000001 sont interdits.

8. Système de synchronisation suivant la revendication 5 ou 6, caractérisé en ce que les huit codes d'étiquette 101010101, 01010101, 00011110, 00111101, 01111010, 11110101, 11101010 et 11010101 sont interdits.

9. Circuit de synchronisation utilisable dans un système de synchronisation suivant l'une des revendications 4 et 6, caractérisé en ce qu'il comprend un registre à décalage (RE) à huit étages dont l'entrée série est reliée à la ligne de transmission du train numérique (INFO) et dont les huit sorties parallèles sont reliées aux premières entrées d'un comparateur (COMP) dont les secondes entrées sont à l'état binaire «0» et dont la sortie est reliée à la première entrée d'une porte OU (P4) dont la sortie est reliée à l'entrée D d'une bascule (DBL) dont la sortie Q est reliée à la première entrée d'une première porte ET (P3), les deux premières sorties parallèles du registre à décalage (RE) étant, en outre, respectivement reliées aux deux entrées d'une porte OU-exclusif (P1) dont la sortie est reliée, d'une part, à la seconde entrée de la première porte ET (P3) et, d'autre part, à la première entrée d'une seconde porte ET (P2), la sortie de la première porte ET (P3) étant reliée, d'une part, à la seconde entrée de la porte OU (P4) et, d'autre part, à l'entrée d'activation d'un premier compteur (CT1) dont l'avant-dernière sortie est reliée, d'une part, à l'entrée de remise à zéro de la bascule (DBL) et, d'autre part, à la seconde entrée de la seconde porte ET (P2) dont la sortie est reliée à l'entrée d'initialisation d'un second compteur cyclique (CT2) dont la durée du cycle est égale à celle d'un intervalle de temps, les entrées d'horloge du registre (RE), de la bascule (DBL) et des premier et second compteurs (CT1), (CT2) étant reliées à la sortie d'une horloge (CL).

**Patentansprüche**

1. Synchronisations-System für ein digitales Übertragungs-System mit einem in gleiche und sich wiederholende Zeitintervalle unterteilten Multiplex, wobei die zu übertragende Information in Pakete unterteilt ist, und wobei jedes Paket (A, B oder D) ein Zeitintervall einnimmt und ein Etikett (X, Y oder Z) mit fester Länge aufweist, das dem Datenfeld vorangeht, dadurch gekennzeichnet, dass in jedem, nicht mit einem Paket besetzten Zeitintervall (C) ein Intervall-Synchronisations-Signal übertragen wird, das dieselbe Länge hat wie ein Paket-Etikett, das aber nicht als Paket-Etikett verwendbar ist, wobei der verbleibende Teil des nicht besetzten Intervalls mit irgendeiner Signalfolge gefüllt wird.

2. Synchronisations-System nach Anspruch 1, dadurch gekennzeichnet, dass in jedem nicht besetzten Zeitintervall der dem Intervall-Synchronisations-Signal folgende Teil eine vorgegebene Folge von Bits ist.

3. Synchronisations-System nach Anspruch 2, dadurch gekennzeichnet, dass das Synchronisations-Schema des digitalen Multiplex durch die zu den nicht besetzten Intervallen passende Konfiguration gebildet wird.

4. Synchronisations-System nach Anspruch 2 oder 3, dadurch gekennzeichnet, dass das Intervall-Synchronisations-Signal eine Folge von «0» ist und die vorgegebene Folge von Bits abwechselnd durch «0» und «1» gebildet wird.

5. Synchronisations-System nach Anspruch 2 oder 3, dadurch gekennzeichnet, dass das Intervall-Synchronisations-Signal die Folge «00001111» ist und die vorgegebene Folge von Bits aus einer abwechselnden Folge von «0» und «1» besteht.

6. Synchronisations-System nach einem der Ansprüche 1 bis 5, dadurch gekennzeichnet, dass jedes Zeitintervall eine Länge von sechzehn Bytes und das Etikett eine Länge von einem Byte hat.

7. Synchronisations-System nach Anspruch 4 oder 6, dadurch gekennzeichnet, dass die acht Etikett-Codes 10101010, 01010101, 00101010, 00010101, 00001010, 00000101, 00000010 und 00000001 gesperrt sind.

8. Synchronisations-System nach Anspruch 5 oder 6, dadurch gekennzeichnet, dass die acht Etiketten-Codes 101010101, 01010101, 00011110, 00111101, 01111010, 11110101, 11101010 und 11010101 gesperrt sind.

9. Synchronisations-Schaltung, die in einem Synchronisations-System nach einem der Ansprüche 4 und 6 verwendbar ist, dadurch gekennzeichnet, dass sie ein achtstufiges Schieberegister (RE) enthält, dessen Serien-Eingang mit der Übertragungsleitung der digitalen Kette (INFO) und deren acht parallele Ausgänge mit den ersten Eingängen eines Komparators (COMP) verbunden sind, dessen zweite Eingänge im binären Zustand «0» sind, und dessen Ausgang mit dem ersten Eingang D eines ODER-Tors (P4) verbunden ist, dessen Ausgang mit dem Eingang eines Flip-Flop (DBL) verbunden ist, dessen Ausgang Q mit dem ersten Eingang eines ersten UND-Tors (P3) verbunden ist, wobei die ersten beiden parallelen Ausgänge des Schieberegisters (RE) auch jeweils mit den beiden Eingängen eines Exklusiv-ODER-Tors (P1) verbunden sind, dessen Ausgang einerseits mit dem zweiten Eingang des ersten UND-Tors (P3) und andererseits mit dem ersten Eingang eines zweiten UND-Tors (P2) verbunden ist, wobei der Ausgang des ersten UND-Tors (P3) einerseits mit dem zweiten Eingang des ODER-Tors (P4) und andererseits mit dem Steuereingang eines ersten Zählers (CT1) verbunden ist, dessen vorletzter Ausgang einerseits mit dem Rückstelleingang des Flip-Flop (DBL) und andererseits mit dem zweiten Eingang des zweiten UND-Tors (P2) verbunden ist, dessen Ausgang mit dem Auslöse-Eingang eines zweiten zyklischen Zählers (CT2) verbunden ist, dessen Zyklusdauer gleich der Dauer eines Zeitintervalls ist, wobei die Takteingänge des Registers (RE) des Flip-Flop (DBL) und des ersten und zweiten Zählers (CT1, CT2) mit dem Ausgang eines Taktgebers (CL) verbunden sind.

**Claims**

1. A synchronization system for a digital transmission system with a multiplex divided into equal and recurrent time intervals, the information to be transmitted being divided into data packets, each data packet (A, B or D) occupying a time interval and including a header having a fixed length preceding the data field, characterized in that, within each idle time interval (C) not carrying a data packet, an interval synchronizing signal is transmitted having the same length as a packet header, but not usable as a data packet header, the remaining part of the idle time interval being filled with any sequence of signals.

2. A synchronization system according to claim 1, characterized in that, within each idle time interval, the part following the interval synchronizing signal is a predetermined sequence of bits.

3. A synchronization system according to claim 2, characterized in that the synchronizing pattern of the digital multiplex is constituted by the configuration proper to the idle time intervals.

4. A synchronization system according to claim 2 or 3, characterized in that the interval synchronizing signal is a sequence of «0» and the predetermined sequence of bits is comprised of «1» and «0» in alternance.

5. A synchronization system according to claim 2 or 3, characterized in that the interval synchronizing signal is the sequence «00001111» and the predetermined sequence of bits is comprised of alternating «0» and «1».

6. A synchronization system according to anyone of claims 1–5, characterized in that every time interval has a length of sixteen bytes and the header a length of one byte.

7. A synchronization system according to claim 4 or 6, characterized in that the eight header codes 10101010, 01010101, 00101010, 00010101, 00001010, 00000101, 00000010 and 00000001 are prohibited.

8. A synchronization system according to claim 5 or 6, characterized in that the eight header codes 10101010, 01010101, 00011110, 00111101, 01111010, 11110101, 11101010 and 11010101 are prohibited.

9. A synchronization circuit usable in a synchronization system according claim 4 or 6, characterized in that its comprises an eight-stage shift register (RE) which has its series input connected to the transmission line of the digital train (INFO) and its eight parallel outputs connected to the first inputs of a comparator (COMP) the second inputs of which are at the binary state «0» and the output of which is connected to the first input of an OR gate (P4) the output of which is connected to the input D of a flip-flop (DBL) the output Q of which is connected to the first input of a first AND gate (P3), the first two parallel outputs of the shift register (RE) being also connected to the two inputs of an exclusive-OR gate (P1), respectively, the output of which is connected, on one hand, to the second input of the first AND gate (P3) and, on the other hand, to the first input of a second AND gate (P2), the output of the first AND gate (P3) being connected, on one hand, to the second input of the OR gate (P4) and, on the other hand, to the control input of a first counter (CT1) the penultimate output of which is connected, on one hand, to the reset input of the flip-flop (DBL) and, on the other hand, to the second input of the second AND gate (P2) the output of which is connected to the initializing input of a second cyclic counter (CT2) which has a cycle duration equal to the duration of a time interval, the clock inputs of the register (RE), the flip-flop (DBL) and the first and second counters (CT1, CT2) being connected to the output of a clock (CL).

FIG.1

ETIQUETTE  MESSAGE  ETIQUETTE  MESSAGE  ETIQUETTE  ETIQUETTE  MESSAGE

X  Y  0  Z

PAQUET NON VIDE  PAQUET NON VIDE  CRENEAU BLANC  PAQUET NON VIDE

A  B  C  X,Y,Z ≠ 0  D

INTERVALLE DE TEMPS

FIG.2

INFO  RE  P1  P2  SYN  CT 2

H  H

COMP  CY

P4  En  CT 1

D  DBL  Q  H

H  P3

R

CL

0 108 028

FIG.3

0 108 028